(19) Europäisches Patentamt
European Patent Office
Office européen des brevets

(11) Publication number: **0 086 919**
**B1**

(12) **EUROPEAN PATENT SPECIFICATION**

(45) Date of publication of patent specification: **16.09.87**

(51) Int. Cl.[4]: **B 01 D 53/36,** B 01 D 53/14, C 01 B 17/05

(21) Application number: **82306861.4**

(22) Date of filing: **22.12.82**

(54) **Process for the selective removal of hydrogen sulfide from gaseous stream.**

(30) Priority: **04.01.82 US 336796**
**25.03.82 US 361947**

(43) Date of publication of application:
**31.08.83 Bulletin 83/35**

(45) Publication of the grant of the patent:
**16.09.87 Bulletin 87/38**

(84) Designated Contracting States:
**BE DE FR GB IT NL**

(56) References cited:
**EP-A-0 005 572**
**GB-A-1 379 624**
**US-A-4 036 942**
**US-A-4 332 781**

(73) Proprietor: **MOBIL OIL CORPORATION**
**150 East 42nd Street**
**New York New York 10017 (US)**

(72) Inventor: **Snavely, Earl Samuel, Jr.**
**2610 Oak CLiff Lane**
**Arlington Texas 76012 (US)**
Inventor: **Jones, Timothy Alan**
**3016 Cody Street**
**Irving Texas 75062 (US)**

(74) Representative: **Cooper, John Anthony et al**
**Mobil Court 3 Clements Inn**
**London WC2A 2EB (GB)**

**EP 0 086 919 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to a process for the selective removal of hydrogen sulfide from gaseous streams additionally containing carbon dioxide. More particularly, the present invention provides a process for selective removal of hydrogen sulfide from gaseous streams containing hydrogen sulfide, even minor amounts of hydrogen sulfide, by oxidizing the hydrogen sulfide with a polyvalent metal chelate solution to form elemental sulfur.

The removal of hydrogen sulfide from gaseous streams such as the waste gases liberated in the course of various chemical and industrial processes, for example, in the pulping of wood, natural gas and crude oil production and in petroleum refining, has become increasingly important in combatting atmospheric pollution. Hydrogen sulfide-containing gases not only have an offensive odor, but such gases may cause damage to vegetation, painted surfaces, and wildlife as well as constitute a significant health hazard to humans. Government regulations have increasingly imposed continuously lower tolerances on the content of hydrogen sulfide which can be vented to the atmosphere, and it is now imperative in many areas to remove virtually all the hydrogen sulfide under the penalty of an absolute ban on continuing operation of a plant or the like which produces the hydrogen sulfide-containing gaseous stream.

The quantities of hydrogen sulfide in process gas streams are not very high. U.S. Patent No. 3,071,433 indicates that the stack gases obtained in the concentration of black liquor, the waste pulping liquor of the Kraft pulping process, contain from 500 to 2000 parts per million (ppm) of hydrogen sulfide. However, the odor of hydrogen sulfide can be detected by humans at a concentration of approximately 0.01 ppm. Consequently, an extremely efficient process for the removal of hydrogen sulfide is required to eliminate small amounts of noxious hydrogen sulfide from process gases.

Carbon dioxide may also be present with hydrogen sulfide as contaminates of gases such as from well casings, combustion floods, geothermal steam, or tank vapors. Often, it is not only desirable to remove $H_2S$ from such gases but to selectively remove $H_2S$ and not remove the carbon dioxide.

One well known method in the art for removing hydrogen sulfide from gas streams involves contacting the gas stream with caustic soda which scrubs the acid gases from the gas stream. U.S. Patent No. 2,747,962 provides a method whereby acid gases such as hydrogen sulfide are removed selectively from a gas stream also containing carbon dioxide using an alkaline liquid such as caustic soda to remove the acid gas. The absorption of the $CO_2$ is much slower than the absorption of $H_2S$ and thus the absorption of $CO_2$ can be prevented by maintaining a very short contact time (0.01—0.02 second) between the gas stream and alkaline liquid. However, a disadvantage of this process is that when the alkaline liquid is regenerated by heating to around 270°F (132°C), $H_2S$ is produced and thus the $H_2S$ disposal problem is not solved but merely postponed.

It is also known to effect removal of hydrogen sulfide in an oxidation-reduction system by contacting the hydrogen sulfide-containing gas stream with a solution of a polyvalent cation (such as iron) complexed with a chelating agent (such as ethylene-diaminetetraacetic acid or sodium salt thereof). In such a process iron in the ferric state oxidizes the hydrogen sulfide to sulfur, the iron is reduced to the ferrous state, and the solution is regenerated by aeration to convert the iron back to the ferric state. The sulfur is recovered from the solution by froth flotation.

For example, U.S. Patent No. 4,036,942 discloses a process for removing hydrogen sulfide and alkyl mercaptans from fluid streams by reaction with oxygen in the presence of a metal amino acid chelate in aqueous solution containing an amine, resulting in the conversion of hydrogen sulfide to sulfur and alkyl mercaptans to dialkyldisulfides, and separating these from the aqueous metal chelate solution. However, the presence of oxygen in the reactants is disadvantageous in that this results in the conversion of sulfur to sulfates and thiosulfates. Also, when using relatively concentrated catalyst solutions, of the order of 10—50 wt.% catalyst in solution, contact times as short as 0.36 seconds were found suitable, while use of dilute solutions of the order of 1 wt.% catalyst, required contact times of approximately 25 seconds for adequate $H_2S$ removal. Furthermore, the use of a relatively long contact time between the metal chelate solution and the hydrogen sulfide-containing gas stream means that, if carbon dioxide is also present in the gas stream, absorption of carbon dioxide into the reaction solution occurs, thus lowering the pH and reducing the efficiency of the reaction.

U.S. Patent No. 4,009,251 also describes a process for removing hydrogen sulfide and alkyl mercaptans from gaseous streams by oxidizing the hydrogen sulfide to sulfur substantially without formation of sulfur oxides, in the presence of a metal chelate catalyst solution and a soluble alkali metal or alkali earth metal of ammonium or amine salt of an acid having a pK within the range of about 1.2 to about 6. The alkyl mercaptans are oxidized to dialkyldisulfides under the same conditions., The process attempts to eliminate the oxidation of hydrogen sulfide to sulfur oxides by the addition of the above-described acid salts. Such addition to the metal chelate catalyst solution is required since US Patent No. 4,009,251 reacts the hydrogen sulfide-containing gas stream with oxygen and recognizes that sulfur oxides may be formed by such a reaction mixture. Furthermore, the process requires relatively long contact times for oxidation and thus when carbon dioxide is present in the hydrogen sulfide-containing gas stream, the relatively long contact time also results in the absorption of $CO_2$ and the consequential reduction in the pH of the solution and reduction in the efficiency of the system.

The present invention seeks to provide an improved process for selectively removing hydrogen sulfide from a gaseous stream which also contains carbon dioxide.

Accordingly, the present invention provides a process for selectively removing hydrogen sulfide from a gaseous stream additionally containing carbon dioxide which comprises contacting the gaseous stream with a polyvalent metal chelate solution, characterized in that such contact is carried out without addition of oxygen containing gas and for a time period from 0.006 to 0.08 seconds, and that the metal chelate solution is subsequently regenerated with an oxygen containing gas.

The off gas and the reduced metal chelate solution containing the sulfur particles are separated and the sulfur particles recovered from the solution while simultaneously regenerating the reduced metal chelate by bubbling oxygen or an oxygen-containing gas through the liquid using a commercial froth flotation apparatus conventionally used for separating oil from water. The solid sulfur produced is of high purity and once separated from the solution may be sold without any further chemical treatment.

The polyvalent metal chelate solutions employed in the process of the invention are preferably coordination complexes in which the polyvalent metals form chelates with amino acids having one of the following general formulae:

$$(A)_{3-n}—N—(X)_n \qquad \text{I}$$

wherein

n is a nubmer from 1 to 3;

X is selected from acetic and propionic acid groups;

A is 2-hydroxy ethyl, 2-hydroxy propyl, or an alkyl group having from 1 to 4 carbon atoms;

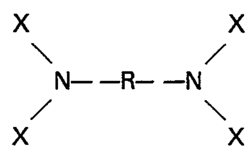

II

wherein

from two to four of the groups X are selected from acetic and propionic acid groups;

from zero to two of the groups X are selected from 2-hydroxy ethyl, 2-hydroxy propyl, and

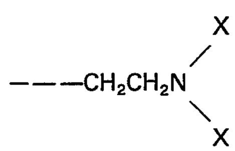

wherein

R is ethylene, propylene or trimethylene or alternatively cyclohexane or benzene where the two hydrogen atoms replaced by nitrogen are in the 1,2-position.

As the polyvalent metal, any polyvalent metal that exists in more than one oxidation stage can be used, but iron, copper and manganese are preferred, especially iron. The polyvalent metal should be capable of oxidizing hydrogen sulfide to sulfur, while being reduced itself from a higher to a lower valence state, and should then be oxidizable by oxygen from the lower valence state to the higher valence state, in a typical redox reaction. Other polyvalent metals which can be used include lead, mercury, palladium, platinum, tungsten, nickel, chromium, cobalt, vanadium, titanium, tantalum, zirconium, molybdenum, and tin.

The polyvalent metal chelates are readily formed in aqueous solution by reaction of an appropriate salt, oxide or hydroxide of the polyvalent metal and the chelating agent in the acid form or an alkali metal or ammonium salt thereof. Exemplary chelating agents include: amino acetic acids derived from ammonia or 2-hydroxy alkylamines, such as glycine, diglycine (amino diacetic acid), NTA (nitrilo triacetic acid), 2-hydroxy alkyl glycine; di-hydroxyalkyl glycine, and hydroxyethyl or hydroxypropyl diglycine; amino acetic acids derived from ethylene diamine, diethylene triamine, propylene diamine, and trimethylene diamine, such as EDTA (ethylene diamine tetraacetic acid), HEDTA (2-hydroxy ethylethylene diamine triacetic acid), DETPA (diethylene triamine pentaacetic acid), amino acetic derivatives of cyclic 1,2-diamines, such as 1,2-diamino cyclohexane-N, N-tetraacetic acid, and the amides of polyamino acetic acids disclosed in U.S. Patent No. 3,580,950.

A quantitative reaction is obtained at room temperature, so that there is no need to employ higher temperatures, although higher temperatures can be used, if desired. For instance, hot gases can be treated provided that care is taken to compensate for the water lost by evaporation. The metal chelate solution is stable to at least about 100°C, and thus the reaction can be carried out at elevated temperatures, to at least about 100°C.

The pH of the system should be within the range from about 7 to about 11. The upper limit is present only because the metal chelate solutions are generally not stable at pHs higher than 11. However, the

higher the pH the more efficient is the oxidation of $H_2S$ to sulfur, thus, if a metal chelate could be found to be stable at a pH higher than 11, such a metal chelate may be used. The most efficient range for a given set of conditions is from a pH of about 8 to about 10.5. If the chelate solution is acidic, it is necessary to adjust the pH of the solution to within the appropriate range by addition of an alkali metal hydroxide, for example sodium hydroxide, an alkali metal or ammonium carbonate or bicarbonate or ammonium hydroxide.

Any gas-liquid contact system which ensures good contact between the hydrogen sulfide-containing gas phase and liquid phase containing the metal chelate can be used. In either a continuous or intermittent flow-system, concurrent, countercurrent, and cross-flows can be used. A preferred gas-liquid contact system is a static mixer which comprises a hollow tube having fixed internal baffles, no moving parts and no external power requirements other than required to cause flow. The particular baffle design used blends or disperses all flowable materials with predictable precision. Many such static mixers are commercially available. The contact time between the gas and liquid phases in the static mixer is controlled by controlling the velocity of the streams and the length of the static mixer.

The process of the present invention is applicable to any gaseous stream containing hydrogen sulfide in any concentration, even in very low concentrations of the order of a few parts per million, and in which carbon dioxide is also present even at high levels (greater than 75% weight) in the gaseous stream containing hydrogen sulfide. Examples of gaseous streams which contain hydrogen sulfide and carbon dioxide include sour gases and waste gases from petroleum refining, shale oil and tar sands processing, coal gasification, gases recovered during crude oil and natural gas production, stack gases from cellulose pulping processes, gaseous effluents from sewage disposal plants, tail gases from Claus Process units, and hydrogen sulfide waste gases from other chemical and industrial process.

The following equations illustrate the process reactions when an iron chelate is used as the catalyst to convert the hydrogen sulfide to elemental sulfur.

Absorption:

$$H_2S+2OH^- \rightarrow S^{--}+2H_2O$$

Oxidation:

$$2[Fe(X)]^{+++}+S^{--} \rightarrow S^0+2[Fe(X)]^{++}$$

Regeneration:

$$2[Fe(X)]^{++}+1/2O_2+2H^+ \rightarrow 2[Fe(X)]^{+++}+H_2O$$

Overall net reaction:

$$H_2S+1/2O_2 \rightarrow S^0+H_2O$$

where X is the chelating agent.

This invention will now be more particularly described with reference to the accompanying drawings, in which:

Figure 1 is a schematic diagram of apparatus for removing hydrogen sulfide from a gaseous stream by a process according to one example of the invention,

Figure 2 is a part-sectional view of part of the regeneration system of the apparatus shown in Figure 1,

Figure 3 is a graph comparing the regeneration system of Figure 2 with alternative forms of regeneration apparatus,

Figure 4 is a graph illustrating the variation in hydrogen sulfide removal from a gas stream in accordance with the pH of an iron chelate solution,

Figure 5 is a graph illustrating the dependence of hydrogen sulfide removal on the iron concentration of the iron chelate solution,

Figure 6 is a graph illustrating the dependence of carbon dioxide absorption on the residence time of the gas stream in a static mixer supplied with the iron chelate solution,

Figure 7 is a graph illustrating the dependence of hydrogen sulfide removal on the length of the static mixer,

Figure 8 is a graph illustrating the dependence of hydrogen sulfide removal on the gas to liquid ratio, and

Figure 9 is a graph illustrating the effect of hydrogen sulfide removal with varying pH.

Referring to the drawings, the invention can best be understood with reference to the cyclic system for removal of hydrogen sulfide from a gaseous stream as illustrated in Figure 1. The cyclic system generally indicated in Figure 1 is particularly useful in the selective removal of hydrogen sulfide from hydrogen sulfide-containing gas streams which also contain major proportions of carbon dioxide. A hydrogen sulfide-containing gas stream enters the system as a stream 12 and is distributed to three static mixer-separator trains 14, 16, 18 each comprising a static mixer 20 and a liquid-gas separator 22 immediately following. A ferric chelate solution having a pH above 7, enters each of the static mixer-separator trains 14, 16 and 18 from stream 24. The contact time between the gas and liquid phases in each static mixer 20 is kept at from 0.006 to 0.08 second and preferably is kept between 10 and 80 milliseconds. The contact time is controlled by controlling the flow rate of the gas and liquid stream into the

individual static mixers 20 which have fixed lengths and internal diameters. In the contact zone of the static mixer 20 the hydrogen sulfide in the inlet gas is oxidized instantaneously to elemental sulfur by the iron chelate solution. The sulfur solids precipitate as a slurry in the treating solution.

The off gas stream 26 taken from overhead the separators 22 of the individual static mixer-separator trains is conveyed to respective second static mixer-separator trains 28, 30 and 32, each of which comprises a static mixer and separator structure equivalent to the static mixer 20 and separator 22 of the first static mixer-separator trains 14, 16 and 18. The gas from stream 26 is contacted with metal chelate solution from stream 24 in each second mixer-separator train preferably for about 10 to 80 milliseconds. The off gas taken overhead each separator in static mixer-separator train 28, 30 and 32 leaves the individual separator as a stream 34 which feeds a stream 36 which in turn conveys the off gas to an incinerator. Stream 38 is a by-pass stream which feeds the off gas to feed stream 12 if extra feed gas is needed to obtain the required residence time in the static mixers.

Often, feed gas stream 12 will not be of the correct volume flow rate to provide the desired residence time in the static mixers for selective $H_2S$ removal. The parallel static mixers 14, 16 and 18 are used to divide the feed stream and provide the required gas flow through each mixer. Valves 13, 15 and 17 allow control of the feed gas into the desired static mixer.

The liquid containing the reduced metal ion and sulfur solids from each of the separators 22 in the first and second static mixer-separator trains is piped via streams 40 to stream 42 which feeds a pair of tanks 44 and 46 which can be generally referred to as the regeneration stage of the process. In the regeneration stage of the process, the iron which has been reduced during the oxidation of hydrogen sulfide to sulfur is regenerated (oxidized) to the higher oxidation state and the sulfur particles which are suspended in the slurry are separated by froth flotation. The chelated iron contained in the liquid entering tanks 44 and 46 from stream 42 is approximatley 60% by weight ferric iron chelate and 40% by weight ferrous iron chelate. Tanks 44 and 46 comprise a plurality of flotation cells, preferably "WEMCO" cells sold by Envirotech Corp. In each cell an oxygen-containing gas such as air is carried into the liquid by a vacuum formed during the movement of a rotor within the body of liquid. The oxygen-containing gas is dispersed in minute bubbles which carry the suspended sulfur to the top of each cell and which oxidize the reduced iron. The regenerated solution is piped via streams 48 and 50 from tanks 44 and 46, respectively to a surge tank 54 via line 52. The regenerated solution is pumped back to the static mixer-separator trains via line 24.

The sulfur and residual metal chelate solution from tanks 44 and 46 is piped to a sulfur melting system 56 via lines 58 and 60. The molten sulfur is removed via stream 62 and any remaining iron chelate solution is piped back to surge tank 54 via stream 52. Iron chelate solution make-up and pH adjusting solution are stored in tanks 64 and 66 and can be pumped into the system when needed.

As previously stated, preferred regeneration apparatus used in the present invention is a commercial flotation cell marketed under the tradename WEMCO. Such apparatus has been used to separate oil from oil and water mixtures. It has now been found that the WEMCO flotation cell acts very efficiently as a reactor for gas-liquid phase chemical reactions and is further capable of separating any solids which may be present before or after completion of the reaction. The preferred regeneration apparatus depicted in Figure 1 as tanks 44 or 46 consists of four flotation cells, one of which is shown at 70 in Figure 2. Reference is also made to U.S. Patent Nos. 3,491,880 and 3,647,069 which further disclose the flotation apparatus. Each flotation cell 70 comprises a tank 72 which includes inwardly inclined lower sidewall portions 74.

Each cell 70 also includes a rotor 76 and a disperser 78 surrounding at least the upper portion of the rotor 76 and circumferentially spaced from the rotor. Disperser 78 contains a plurality of fluid passage openings 80 uniformly spaced along substantially the entire circumferential surface of the disperser 78. Rotor 76 is fixed to the bottom of a shaft 82 and is supported a substantial distance above the bottom wall of tank 72 for rotation about an essentially vertical axis. Rotor 76 is positively rotated through belts 84 and pulleys 85 and 86 by a motor 88 supported above the top of tank 72. A stand pipe 90 surrounds shaft 82 and forms a conduit for air from above the liquid level in tank 72 to the interior of tank 72 at the vicinity of rotor 76. An air intake 92 is formed in stand pipe 90 above the liquid level of tank 72 and secured to the upper edge of disperser 78 is a downwardly outwardly flaring perforated disperser hood 94.

Ferrous iron chelate solution containing the suspended sulfur particles is introduced into tank 72 of cell 70. As rotor 76 spins, the rotating motion forms a vortex and forces water through fluid openings 80 of disperser 78 and thus creates a vacuum in stand pipe 90. The vacuum draw air through air intake 92 down stand pipe 90 for dispersion in the iron chelate solution and thoroughly mixes the gas with the solution. As the gas-liquid mixture travels through disperser 78 at high velocities, a shearing force is created, causing the gas to form minute bubbles. As the air bubbles float through the metal chelate solution, the bubbles carry with them the sulfur particles to the surface of cell 70. Skimmer paddles 96 remove the sulfur particles concentrated at the surface of the metal chelate solution. Additionally, the air or any other oxygen-containing gas oxidizes the ferrous ion to the ferric ion to regenerate the iron chelate which can be recycled and conveyed to the static mixers for hydrogen sulfide oxidation.

It has been found that the WEMCO flotation cell is highly efficient in oxidizing the ferrous chelate iron to the ferric chelate. In Figure 3 the time needed to regenerate substantially all of the ferrous iron chelate is illustrated for three types of regenerations systems, e.g. bubble tank, packed tower and WEMCO. The WEMCO was operated at 1200 rpms and air was the oxygen-containing gas which was dispersed in the solution. As can be seen in Figure 3, the WEMCO flotation apparatus regenerated the ferrous iron chelate

solution in 1 to 2 minutes while the bubble tank took 50 minutes to regenerate 87% of the total iron to the ferric ion. Normal field applications would regenerate the solution from the 40% ferrous state. The packed column test was operated as a flowing system while various regeneration times were achieved by varying the liquid hold-up in the column. The inlet ferrous percentage for the packed column was maintained at 40%. With a 10 minute hold-up time the packed column regenerated 70% of the iron ions to the ferric state.

The WEMCO flotation cell operated with the highest regeneration efficiency and has definite advantages over other regeneration systems. When using the WEMCO flotation cell, no air blowers are required because the air is dispersed in the solution due to the low pressure vortex created in the stand pipe by rotation of the rotor. Furthermore, with the WEMCO flotation cell, the sulfur is concentrated by frothing action, therefore, reducing the solution inventory to be filtered. It has been found that the induced gas flow into the liquid and the shearing action of the gas-liquid mixture through the disperser yields a higher efficiency of regeneration of the reduced metal chelate. Aerators which induce a flow of air through a liquid without the gas-liquid shearing action of the WEMCO may not be as efficient at regenerating the reduced metal chelate. An example of such an aerator for oxidizing hydrogen sulfide in a liquid is U.S. Patent No. 4,309,285.

As stated with reference to Figure 2, the sulfur is recovered from the surface of the solution in each of the flotation cells 70 which make up tanks 44 and 46. The sulfur particles and residual metal chelate solution is then subjected to heat treatment at about 270°F (132°C) to melt the sulfur. It is advantageous to use an excess of chelating agent particularly when the metal is iron chelated with HEDTA. It has been found that a 6% or more molar excess of chelating agent keeps the iron in stable solution during gas-liquid contact, regeneration, and sulfur melting such that there is no appreciable iron precipitation as hydroxide. The loss of iron is thus prevented. When HEDTA is used as the chelating agent a 6% molar excess is sufficient when the regenerated chelate solution is at a pH of about 8.8. Since an increase in pH renders the iron chelate solution less stable, it is believed that a larger excess is desirable as the pH is increased. The amount of excess is dependent upon the chelating agent which is used and accordingly, other iron chelates may need more or less excess of chelate to keep the iron stable under the operating conditions. The molten sulfur has a density of 1.808 g/cc, which is substantially higher than the residual metal chelate solution and accordingly, the molten sulfur is collected at the bottom of the heating vessel. The sulfur recovered is of high purity and may be recovered directly from the vessel and sold as such. Other separation systems such as filters or centrifuges can be used.

To further increase the regeneration rate of the chelated ferrous solution to chelated ferric solution, an oxidizing adjunct including dihydroxybenzenes (hydroquinones), anthraquinones and naphthaquinones which represent a "half way" stage between hydroquinones and dihydroxydurene can be added to the metal chelate solution. Anthraquinone is water insoluble so the molecule is partly sulphonated to enhance water solubility. Preferably 2,7-anthraquinone disulphonic acid disodium salt (ADA) is used to increase the oxidation rate of the reduced metal chelate. Of course the various isomers of anthraquinone disulphonic acid may also be used. As shown in Table 1, the regeneration rate of ferrous iron is enhanced with the addition of ADA. The ADA is then oxidized by the oxygen-containing gas in the regeneration stage. ADA may also react with the hydrogen sulfide to produce elemental sulfur. It has been found, however, that the presence of ADA in the gas-liquid contact zone of the static mixture produces undesirable sulfur compounds.

TABLE 1
Effect of ADA on regeneration of chelated iron solution*

| Amount of ADA g/l | Percentage ferrous iron regenerated % | Regeneration time (min.) | Air to liquid ratio |
|---|---|---|---|
| 0 | 39 | 1.2 | 58 |
| 0.25 | 58 | 1.0 | 50 |
| 3.0 | 55 | 1.2 | 55 |
| 0 | 60 | 5.3 | 58 |
| 0.25 | 89 | 4.0 | 53 |
| 0 | 43 | 8.5 | 12 |
| 0.25 | 78 | 4.0 | 16 |
| 3.0 | 98 | 5.3 | 21 |
| 0 | 52 | 5.3 | 29 |
| 0.25 | 78 | 4.0 | 38 |

*Apparatus was packed column

It is important to eliminate the presence of oxygen in the contact zone between the polyvalent metal chelate and the hydrogen sulfide-containing gaseous stream in order to prevent the formation of sulphates, thiosulphates and sulfur oxides. This can be done by advantageously allowing the regeneration of less than 100% of the reduced chelate, thus assuring that no excess oxygen is present in the regenerated solution.

Experimental

The process of the invention was used selectively to remove hydrogen sulfide from the waste gas produced in an oil field. The hydrogen sulfide-containing gas stream tested had a composition of approximately 1.2% hydrogen sulfide, 88% carbon dioxide, 5% nitrogen and 5.8% hydrocarbons all by volume.

The metal chelate solutions used comprised a mixture of ferric chloride and EDTA (ethylene diamine tetraacetic acid). The relative mixtures of the iron chelate solutions used in the analysis are shown in Table 2. The pH of the solutions were varied using sodium carbonate, sodium bicarbonate, and sodium hydroxide.

TABLE 2

| Solution No. | Run No. | $FeCl_3$ (g) | EDTA (g) | Distilled water (l) | Sodium carbonate (g) | Sodium bicarbon. (g) | Sodium hydroxide (Ml 12.5%) | pH |
|---|---|---|---|---|---|---|---|---|
| 1* | 1 | 316 | 486 | 18 | 162 | 297 | — | 7.6 |
| 2 | 2 | 316 | 486 | 18 | 110 | 297 | 90 | 8.6 |
| 3 | 3,4 | 316 | 486 | 18 | 20 | 50 | 350 | 8.6 |
| 4 | 5,6 | 316 | 486 | 18 | 20 | 50 | 350 | 8.6 |
| 5 | 7 | 316 | 486 | 18 | 125 | — | — | 8.7 |
| 6A | 8 | 327 | 505 | 8 | 187 | — | — | 8.5 |
| 6B** | 9 | — | — | — | — | — | — | 8.5 |
| 7A | 10 | 316 | 486 | 18 | 145 | — | — | 9.2 |
| 7B** | 11,12 | — | — | — | — | — | — | 10.2 |

*Sequence of addition of carbonates affected pH
**Not a new solution—added sodium carbonate to increase pH

The field waste gas supplied at 25 psig (274 kPa) of pressure was passed through a first trap to collect any condensed liquid prior to passing through a pressure regulator where the pressure was dropped to 6 psig (143 kPa). A second trap was used to collected any condensed liquids that may have formed due to the pressure drop in the pressure regulator, thus supplying a dry saturated gas to a static mixer to which the metal chelate solution was also supplied.

The gas-liquid contact time of absorption in the static mixer was varied from 0.006 second to 0.08 second by varying the gas flow rate in order to determine the optimum residence time needed to obtain selective hydrogen sulfide absorption. The pH was varied from 7.75 to 10.2 to observe the effect of pH on hydrogen sulfide absorption. Two lengths of quarter inch (0.6 cm) diameter static mixers were tested, two inches (5 cm) long and four inches (10 cm) long. Finally, two concentrations of iron chelate solution were used, 0.065N and 0.13N. Table 3 shows the combinations of these variables which were tested.

TABLE 3

| | Contact time (seconds) | Length static mixer (inches) | pH | Gas flow rate (l/min.) | Ferric concentration (normality) |
|---|---|---|---|---|---|
| 1 | .02 | 2 (5 cm) | 7.75 | 5 | .065 |
| 2 | .02 | 2 (5 cm) | 8.67 | 5 | .069 |
| 3 | .04 | 2 (5 cm) | 8.67 | 2.5 | .065 |
| 4 | .04 | 4 (10 cm) | 8.67 | 5 | .065 |
| 5 | .08 | 4 (10 cm) | 8.72 | 2.5 | .065 |
| 6 | .04 | 4 (10 cm) | 8.72 | 5 | .065 |
| 7 | .04 | 4 (10 cm) | 8.5 | 5 | .130 |
| 8 | .02 | 2 (5 cm) | 8.5 | 5 | .130 |
| 9 | .02 | 2 (5 cm) | 9.0 | 5 | .130 |
| 10 | .02 | 2 (5 cm) | 9.2 | 5 | .065 |
| 11 | .02 | 2 (5 cm) | 10.2 | 5 | .065 |
| 12 | .006 | 2 (5 cm) | 10.2 | 8.3 | .065 |

The results of the above experiments are indicated graphically in Figures 4 to 8.

As can be seen in Figure 4, the absorption of hydrogen sulfide increased as the pH increased at corresponding gas to liquid ratios. This indicates that the hydrogen sulfide absorption rate is mainly limited by the hydroxyl ion concentration. At high pHs and gas to liquid ratios, all the ferric ions were converted to the ferrous state instantaneously, illustrating that the conversion of the sulfide ion to sulfur is also instantaneous.

From Figure 5, it is evident that doubling the iron chelate concentration did not double the amount of hydrogen sulfide removed from the gas stream. Although the higher concentration of iron chelate solution removed more hydrogen sulfide, the conversion efficiency of the higher concentrate solution was lower and may not be as economic as the dilute solution. Pumping costs as well as chemical costs would have to be balanced with hydrogen sulfide absorption efficiencies to determine the economic iron chelate solution concentration.

The liquid-gas contact time was varied to determine the optimum residence time in the static mixture needed to obtain selective absorption of hydrogen sulfide with minimum carbon dioxide absorption. The results as shown in Figure 6 illustrate the carbon dioxide absorption dependence on residence time with three different solutions. At a pH of 10.2, the maximum residence time required to obtain the selective absorption of hydrogen sulfide without any carbon dioxide absorption was between 10—20 milliseconds compared with 40—80 milliseconds for a solution at a pH of 8.5. Both of the solutions were identical except for additional sodium carbonate being added to the higher pH solution to obtain such pH. Figure 6 also shows the absorption of $CO_2$ with an iron chelate concentration of twice the other solutions at a pH of 8.5. The maximum residence time for selective absorption of hydrogen sulfide without any appreciable absorption of carbon dioxide for this solution was 20—30 milliseconds. This latter solution also contained a different amount of sodium carbonate. Since the iron chelate concentration should have little or no effect on the absorption of carbon dioxide, the dependence of carbon dioxide absorption is based on the concentration of carbonate in this solution. If sodium hydroxide is used to adjust the pH, the stability of the solution is reduced. When any form of sodium hydroxide was added to the iron chelate solution, a localized pH developed which precipitated iron hydroxide. The iron hydroxide is difficult to dissolve in the iron chelate solutions used and only very slowly goes back into the solution to the chelate complex.

Mixing characteristics were investigated by doubling the static mixer length to determine whether perfect mixing had been achieved by the shorter mixer. Figure 7 illustrates that no difference in absorption was seen when the mixer length was doubled; therefore, perfect mixing was achieved with the two inch (5 cm) static mixer which contained six baffle elements.

The percent of hydrogen sulfide removed is a function of the amount of liquid in contact with the gas, i.e., gas to liquid ratio. As seen in Figure 7 the percent of hydrogen sulfide removed from the gas stream

versus the gas to liquid ratio was an exponential function when the solution pH was lower than 10. Thus at pH of 10 or higher, adequate hydrogen sulfide absorption can be maintained at more economic gas to liquid ratios.

The hydrogen sulfide-containing field gas was further tested utilizing a static mixer having a diameter of two inches (5 cm) and being 21 inches (53 cm) long. At a flow rate of 225 MCFD (4422 l/min) of field gas the residence time in the static mixer was 15 milliseconds. The iron chelate solution used was supplied by Dow Chemical Company in which the iron was chelated with HEDTA (n-hydroxyethyl ethylenediamine triacetic acid). The chelate solution contained 0.25 wt.% iron. The iron chelate solution was pumped into the static mixer at a rate of 28 gallons (106 l) per minute, which when combined with the gas feed of 225 MCFD (4422 l/min) gave a contact time of 15 milliseconds with a gas to liquid ratio of 50 to 1.

A sufficient amount of sodium carbonate was added to the iron chelate solution to provide a pH of 9.6. As shown in Table 4, after 21 hours of use the pH of the solution dropped to 8.5. Additional carbonate was added to bring the pH back up to 9.0 and after 11 hours of use the solution was stabilized at a pH of 8.8 while resulting in 98% removal of hydrogen sulfide from the gas stream. The effect of the pH on hydrogen sulfide removal is summarized in Figure 9.

TABLE 4

| pH | | Percent $H_2S$ scrubbed | Gas to liquid ratio v/v | Hours solution run |
|---|---|---|---|---|
| in | out | | | |
| 9.6 | 8.9 | 96.4 | — | 4.0 |
| 9.4 | 8.8 | 96.4 | 35.7 | 7.0 |
| 8.8 | 8.2 | 95.0 | 48.5 | 8.5 |
| 8.9 | 8.2 | 91.8 | 45.7 | 9.5 |
| 8.9 | 8.1 | 91.4 | 58.7 | 11.5 |
| 8.9 | 8.1 | 95.5 | 38.2 | 13.5 |
| 8.8 | 7.6 | 94.4 | 53.1 | 15.5 |
| 8.5 | 7.5 | 84.0 | 48.7 | 16.5 |
| 8.5 | 7.5 | 84.0 | 41.7 | 17 |
| 8.6 | 7.0 | 84.0 | 41.4 | 17.5 |
| 8.5 | 7.6 | 86.5 | 44.9 | 18.5 |
| 8.4 | 7.3 | 86.5 | 41.7 | 19.5 |
| 8.4 | 7.3 | 88.8 | 41.7 | 20.5 |
| Add carbonate: | | | | |
| 9.0 | 8.5 | 96.5 | 41.7 | 1 |
| 9.0 | 8.4 | 95.6 | 50.8 | 2 |
| 9.0 | 8.5 | — | 41.7 | 3 |
| 9.0 | 8.5 | 97.6 | 34.4 | 4 |
| 9.0 | 8.5 | 87.6 | 43.5 | 5 |
| 8.9 | 8.5 | 96.8 | 38.2 | 6 |
| 8.9 | 8.5 | 97.6 | 38.9 | 7 |
| 8.8 | 8.2 | 96.0 | 47.2 | 8 |
| 8.8 | 8.0 | 96.4 | 47.2 | 9 |
| 8.8 | 8.0 | 97.2 | 50.2 | 10 |
| 8.8 | 8.0 | 98.0 | 42.5 | 11 |

As can be seen from the above, the present invention allows the selective removal of hydrogen sulfide from a gaseous stream additionally containing carbon dioxide even in major amounts by contacting the gaseous stream with a polyvalent metal chelate solution for a time sufficient to allow the absorption of hydrogen sulfide without any appreciable absorption of $CO_2$. The absorption of $CO_2$ would be disadvantageous because it would lead to a reduction in pH. As evident from Figure 4, a slight reduction in the pH of the polyvalent metal chelate solution leads to a substantial reduction in hydrogen sulfide absorption. Thus the efficiency of the process of the invention is substantially reduced with the decrease in pH.

The contact time between the hydrogen sulfide hydrogen-containing gas and the polyvalent metal chelate solution should not be allowed to exceed 80 milliseconds (0.08 second), otherwise, carbon dioxide absorption by the chelate solution will result in a decrease in the pH of the solution.

**Claims**

1. A process for the selective removal of hydrogen sulfide from a gaseous stream additionally containing carbon dioxide which comprises contacting the gaseous stream with a polyvalent metal chelate solution, characterized in that such contact is carried out without addition of oxygen containing gas and for a time period from 0.006 to 0.08 seconds, and that the metal chelate solution is subsequently regenerated with an oxygen containing gas.

2. A process according to claim 1, wherein the polyvalent metal is iron.

3. A process according to claim 1 or claim 2, wherein the chelate is ethylenediaminetetraacetic acid.

4. A process according to claim 1 or claim 2, wherein the chelate is N-hydroxylethyl-ethylenediaminetriacetic acid.

5. A process according to claim 2, wherein the polyvalent metal chelate solution contains at least 6% excess chelating agent.

6. A process according to any one of claims 1 to 5, wherein the polyvalent metal chelate solution has a pH between 7 and 11.

7. A process according to any one of claims 1 to 6, wherein after oxidizing the hydrogen sulfide, the polyvalent metal chelate is regenerated by passing an oxygen-containing gas through the solution, and wherein less than 100% of the reduced metal chelate is regenerated so that no excess oxygen is present in the solution.

8. A process according to claim 7, wherein the oxygen-containing gas is bubbled through the solution, and the sulfur particles are carried to the surface of the solution by the bubbles.

9. A process according to claim 7 or claim 8, wherein the oxygen-containing gas is passed through the solution by forming a low pressure area below the surface of the solution and inducing the gas into the low pressure area to disperse the gas in the solution.

10. A process according to claim 8, further comprising separating the sulfur particles from the solution and melting the sulfur particles and separating the molten sulfur from any residual solution.

11. A process according to any one of claims 7 to 9, further comprising adding an oxidizing adjunct to the solution to increase the efficiency of regenerating the polyvalent metal chelate.

12. A process according to claim 11, wherein the adjunct comprises an oxidizing agent selected from hydroquinones, anthraquinones, naphthaquinones, and mixtures thereof.

**Patentansprüche**

1. Verfahren zur selektiven Entfernung von Schwefelwasserstoff aus einem gasförmigen Strom, der zusätzlich Kohlendioxid enthält, bei dem der gasförmige Strom mit einer mehrwertigen Metallchelatlösung in Kontakt gebracht wird, dadurch gekennzeichnet, daß der Kontakt ohne Zugabe von sauerstoffhaltigem Gas und während eines Zeitraumes von 0,006 bis 0,08 Sekunden durchgeführt wird und daß die Metallchelatlösung nachfolgend mit einem sauerstoffhaltigem Gas regeneriert wird.

2. Verfahren nach Anspruch 1, worin das mehrwertige Metall Eisen ist.

3. Verfahren nach Anspruch 1 oder 2, worin das Chelat Ethylendiamintetraessigsäure ist.

4. Verfahren nach Anspruch 1 oder 2, worin das Chelat N-Hydroxylethylethylendiamintriessigsäure ist.

5. Verfahren nach Anspruch 2, worin die mehrwertige Metallchelatlösung mindestens 6% überschüssigen Chelatbildner enthält.

6. Verfahren nach einem der Anprüche 1 bis 5, worin die mehrwertige Metallchelatlösung einen pH-Wert zwischen 7 und 11 aufweist.

7. Verfahren nach einem der Ansprüche 1 bis 6, worin nach der Oxidierung des Schwefelwasserstoffs das mehrwertige Metallchelat regeneriert wird, indem ein sauerstoffhaltiges Gas durch die Lösung geleitet wird und worin weniger als 100% des reduzierten Metallchelats regeneriert werden, sodaß in der Lösung kein überschüssiger Sauerstoff vorhanden ist.

8. Verfahren nach Anspruch 7, worin das sauerstoffhaltige Gas durch die Lösung sprudelt und die Schwefelpartikel durch die Blasen auf die Oberfläche der Lösung getragen werden.

9. Verfahren nach Anspruch 7 oder 8, worin das sauerstoffhaltige Gas durch die Lösung geführt wird, indem unter der Oberfläche der Lösung ein Bereich mit geringem Druck gebildet wird und das Gas in diesen Bereich mit geringem Druck eingeführt wird, um das Gas in der Lösung zu dispergieren.

10. Verfahren nach Anspruch 8, daß weiterhin die Abtrennung der Schwefelpartikel aus der Lösung unter das Schmelzen der Schwefelpartikel und Abtrennen des geschmolzenen Schwefels von jeglicher restlicher Lösung umfaßt.

11. Verfahren nach einem der Ansprüche 7 bis 9, welches weiterhin die Zugabe eines oxidierenden Zusatzes zu dieser Lösung umfaßt, um die Regenerierungswirksamkeit des mehrwertigen Metallchelats zu erhöhen.

12. Verfahren nach Anspruch 11, worin der Zusatz ein Oxidationsmittel umfaßt, das aus Hydrochinonen, Antrachinonen, Naphtachinonen und Mischungen davon ausgewählt ist.

**Revendications**

1. Un procédé d'élimination sélective de l'hydrogène sulfuré contenu dans un courant de gaz

contenant en outre du dioxyde de carbone, qui consiste à mettre le courant gazeux au contact d'une solution de chélate métallique polyvalent, caractérisé en ce que ce contact est mis en oeuvre sans addition de gaz contenant de l'oxygène et pendant une période de temps comprise entre 0,006 et 0,08 seconde et en ce que l'on régénère ultérieurement la solution de chélate métallique à l'aide d'un gaz contenant de l'oxygène.

2. Un procédé selon la revendication 1, dans lequel le métal polyvalent est le fer.

3. Un procédé selon la revendication 1 ou la revendication 2, dans lequel le chélate est l'acide éthylène-diamine tétra-acétique.

4. Un procédé selon la revendication 1 ou la revendication 2, dans lequel le chélate est l'acide N-hydroxyléthyléthylènediamine triacétique.

5. Un procédé selon la revendication 2, dans lequel la solution de chélate de métal polyvalent contient au moins 6% d'agent chélatant en excès.

6. Un procédé selon l'une quelconque des revendications 1 à 5, dans lequel la solution de chélate de métal polyvalent présente un pH compris entre 7 et 11.

7. Un procédé selon l'une quelconque des revendications 1 à 6, dans lequel, après oxydation de l'hydrogène sulfuré, on régénère le chélate de métal polyvalent en faisant passer un gaz contenant de l'oxygène à travers la solution et dans lequel on régérère moins de 100% du chélate de métal réduit de telle sorte qu'il n'y ait pas d'oxygène en excès présent dans la solution.

8. Un procédé selon la revendication 7, dans lequel on fait barboter le gaz contenant de l'oxygène à travers la solution et les particules de soufre sont entraînées vers la surface de la solution grâce aux bulles formées.

9. Un procédé selon la revendication 7 ou la revendication 8, dans lequel on fait passer le gaz contenant l'oxygène à travers la solution en formant une zone de basse pression en-dessous de la surface de la solution et en amenant le gaz de la zone basse pression à disperser le gaz dans la solution.

10. Un procédé selon la revendication 8, consistant en outre à séparer les particules de soufre de la solution, à faire fondre les particules de soufre et à séparer le soufre fondu et la solution résiduaire.

11. Un procédé selon l'une quelconque des revendications 7 à 9, consistant en outre à ajouter un adjuvant d'oxydation à la solution pour augmenter le rendement de la régénération du chélate métallique polyvalent.

12. Un procédé selon la revendication 11, dans lequel cet adjuvant comprend un agent d'oxydation choisi parmi les hydroquinones, les anthraquinones, les naphtaquinones et leurs mélanges.

FIG. I

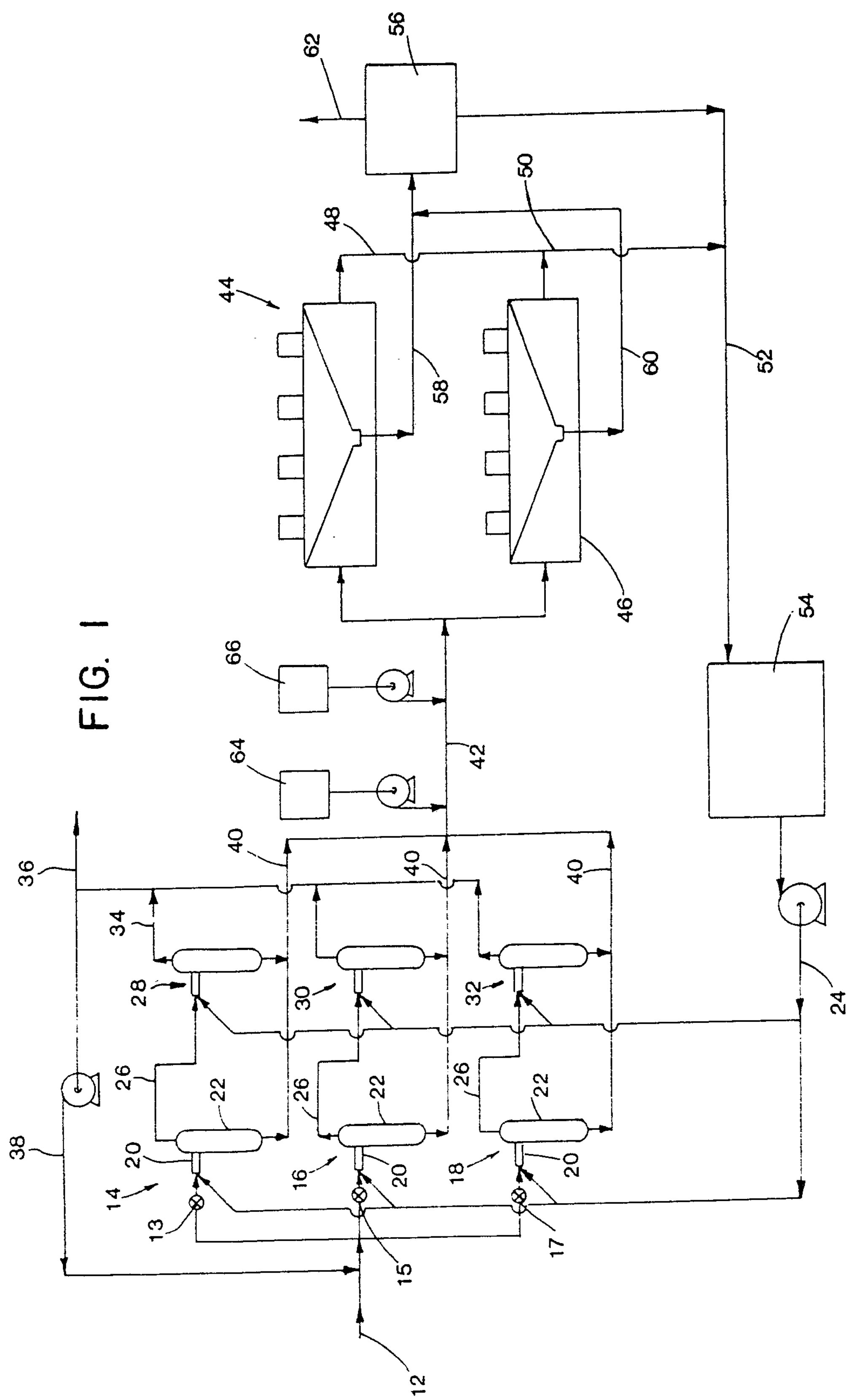

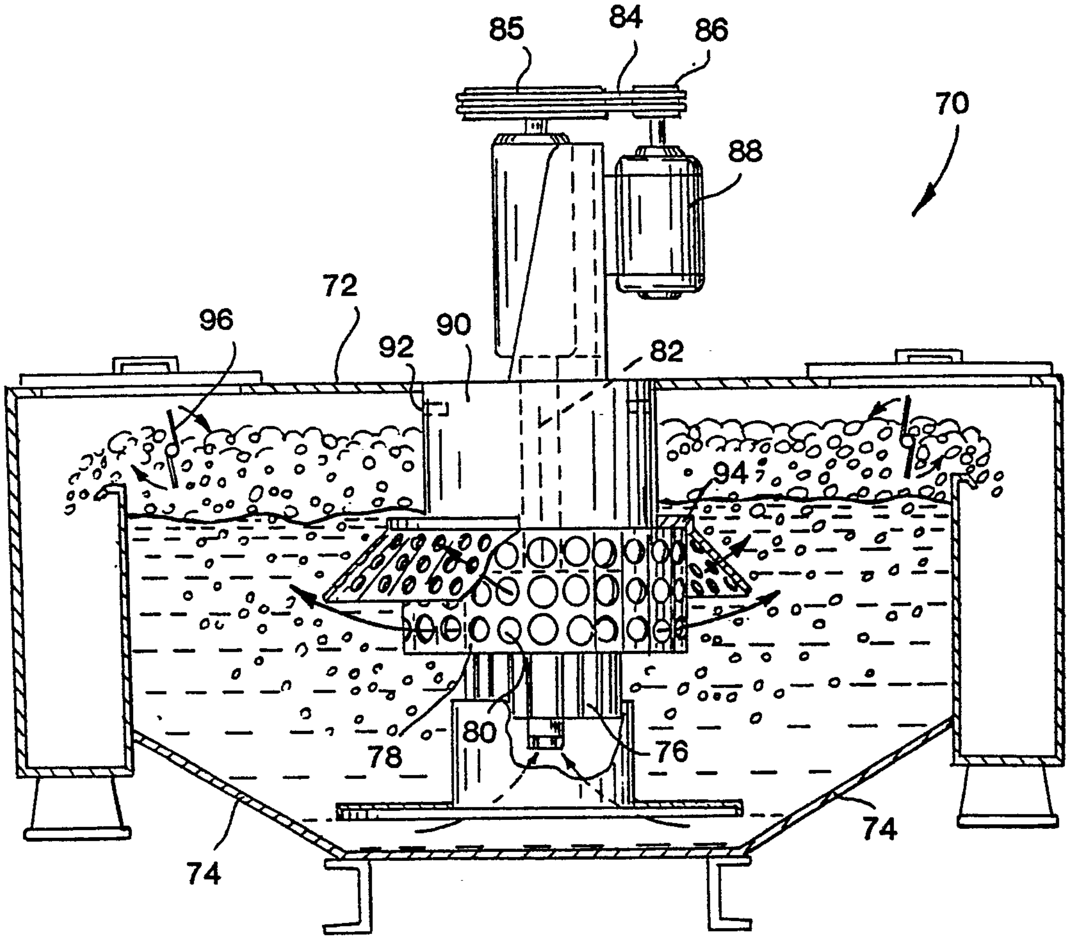


FIG. 2

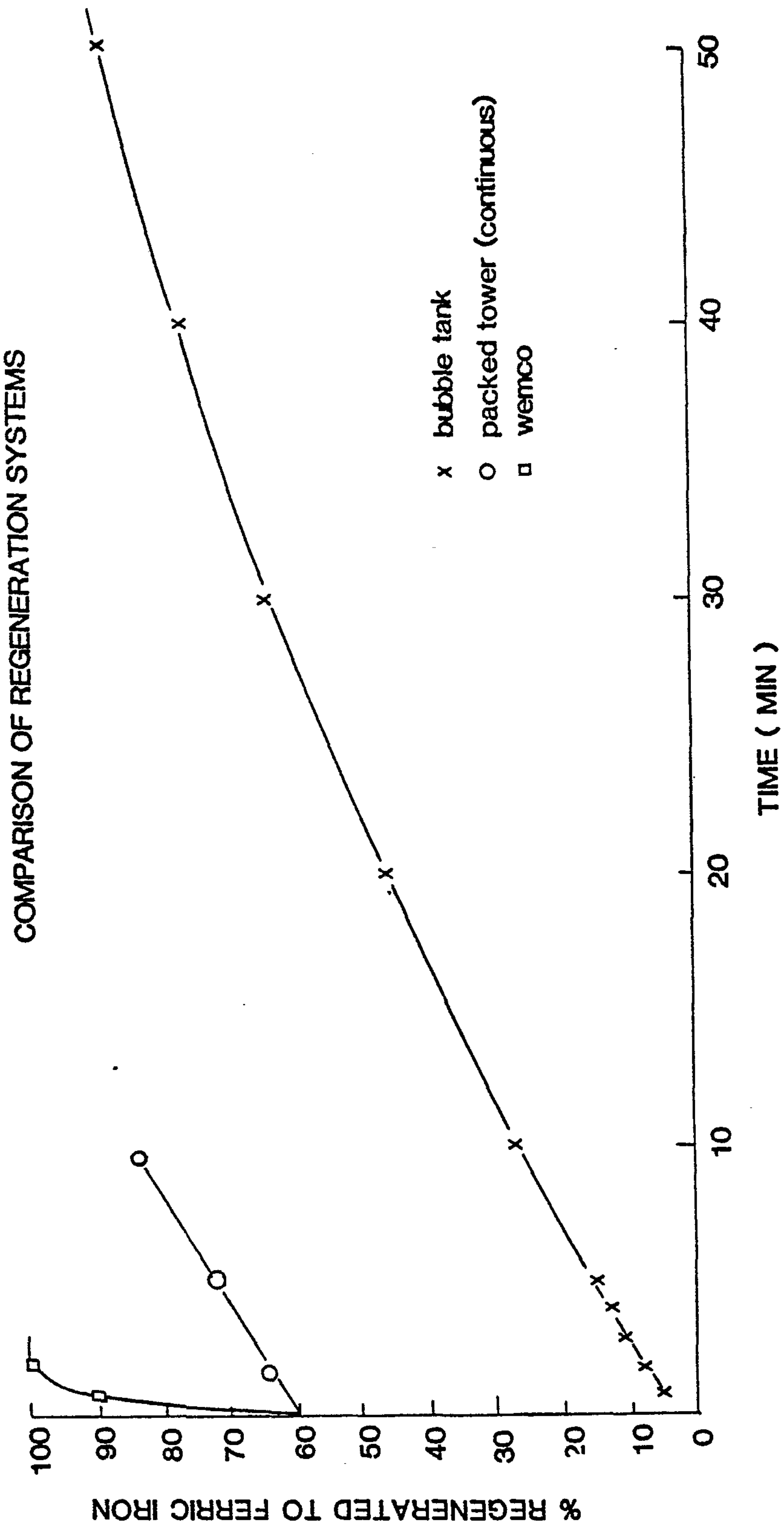

COMPARISON OF REGENERATION SYSTEMS
x bubble tank
o packed tower (continuous)
□ wemco
% REGENERATED TO FERRIC IRON
100
90
80
70
60
50
40
30
20
10
0
10
20
30
40
50
TIME ( MIN )


FIG. 3

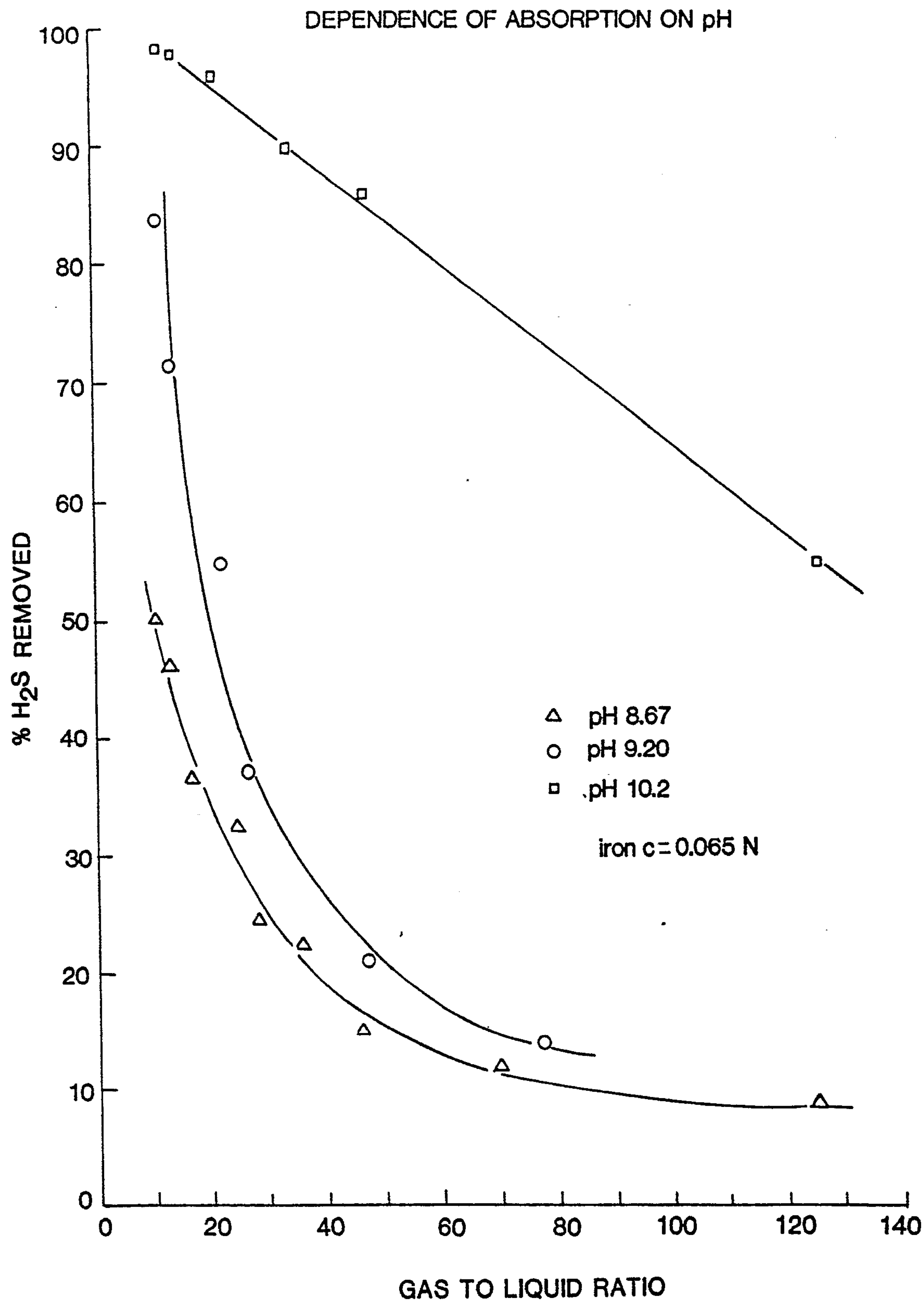
DEPENDENCE OF ABSORPTION ON pH
% $H_2S$ REMOVED
GAS TO LIQUID RATIO
pH 8.67
pH 9.20
pH 10.2
iron c = 0.065 N
0
10
20
30
40
50
60
70
80
90
100
120
140

FIG. 4

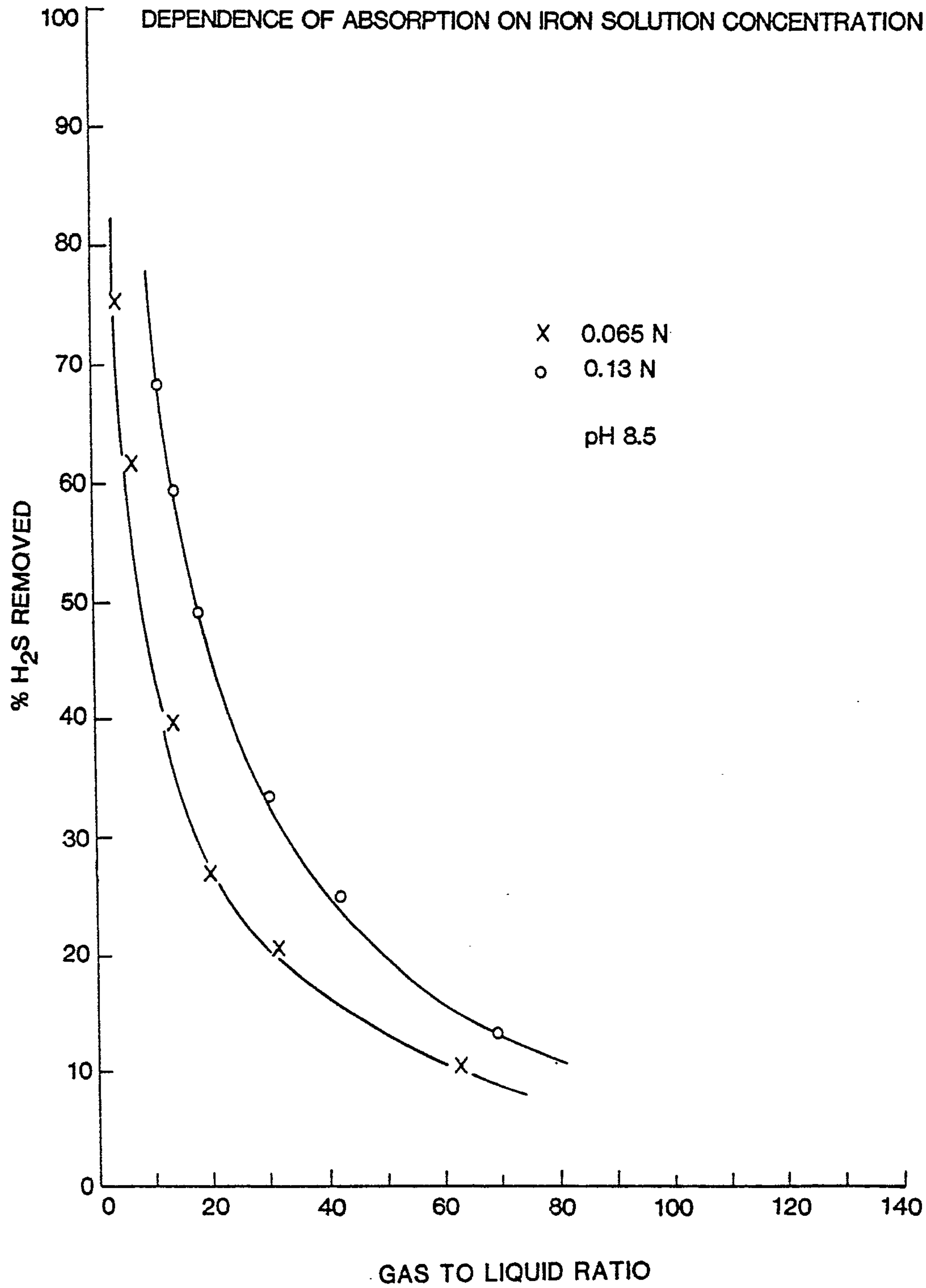

DEPENDENCE OF ABSORPTION ON IRON SOLUTION CONCENTRATION
X 0.065 N
o 0.13 N
pH 8.5
% $H_2S$ REMOVED
0
10
20
30
40
50
60
70
80
90
100
0
20
40
60
80
100
120
140
GAS TO LIQUID RATIO


FIG. 5

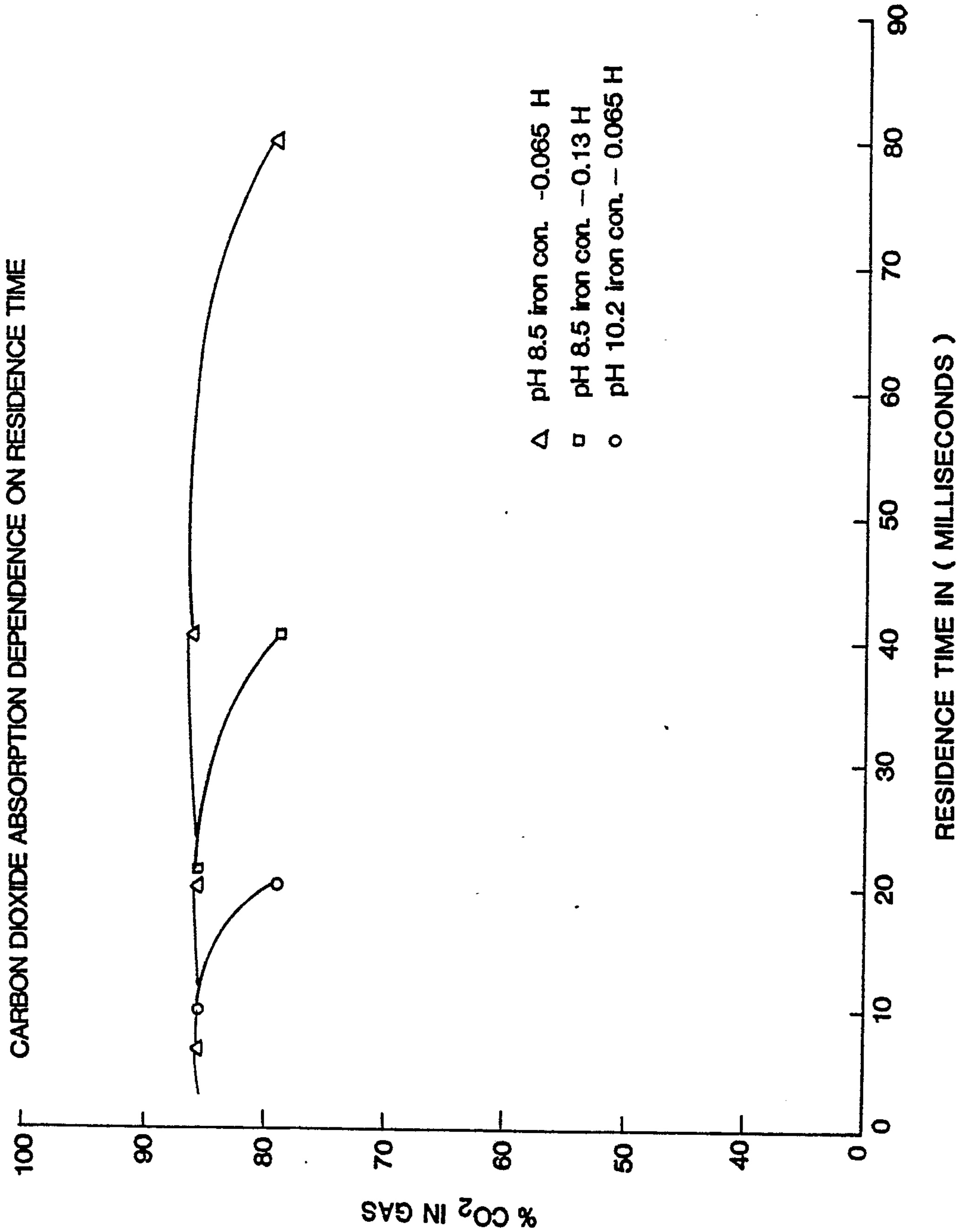
CARBON DIOXIDE ABSORPTION DEPENDENCE ON RESIDENCE TIME
% $CO_2$ IN GAS
100
90
80
70
60
50
40
0
0
10
20
30
40
50
60
70
80
90
RESIDENCE TIME IN ( MILLISECONDS )
pH 8.5 iron con. -0.065 H
pH 8.5 iron con. —0.13 H
pH 10.2 iron con. — 0.065 H

FIG. 6

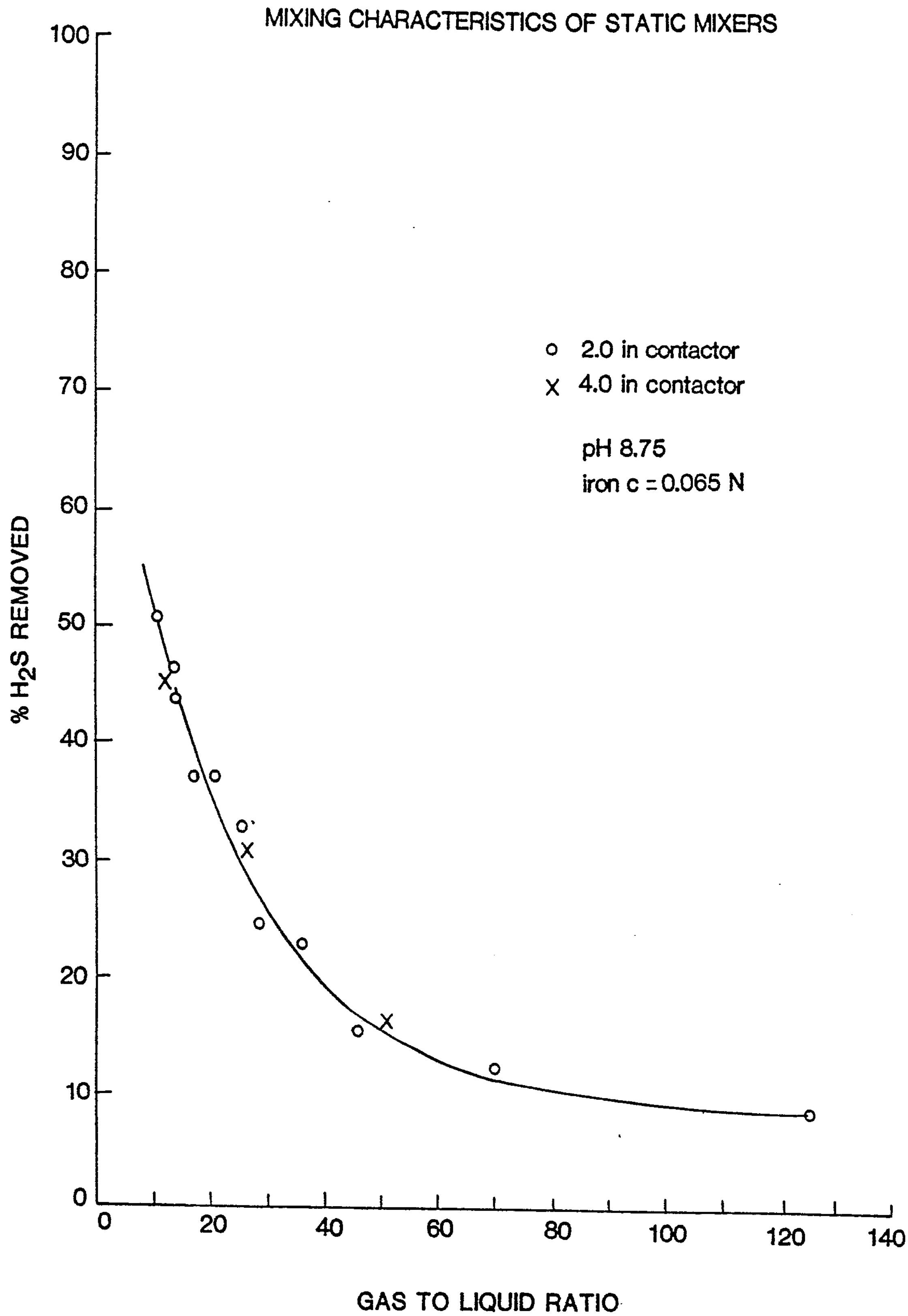
MIXING CHARACTERISTICS OF STATIC MIXERS
% $H_2S$ REMOVED
100
90
80
70
60
50
40
30
20
10
0
o 2.0 in contactor
X 4.0 in contactor
pH 8.75
iron c = 0.065 N
0
20
40
60
80
100
120
140
GAS TO LIQUID RATIO

FIG. 7

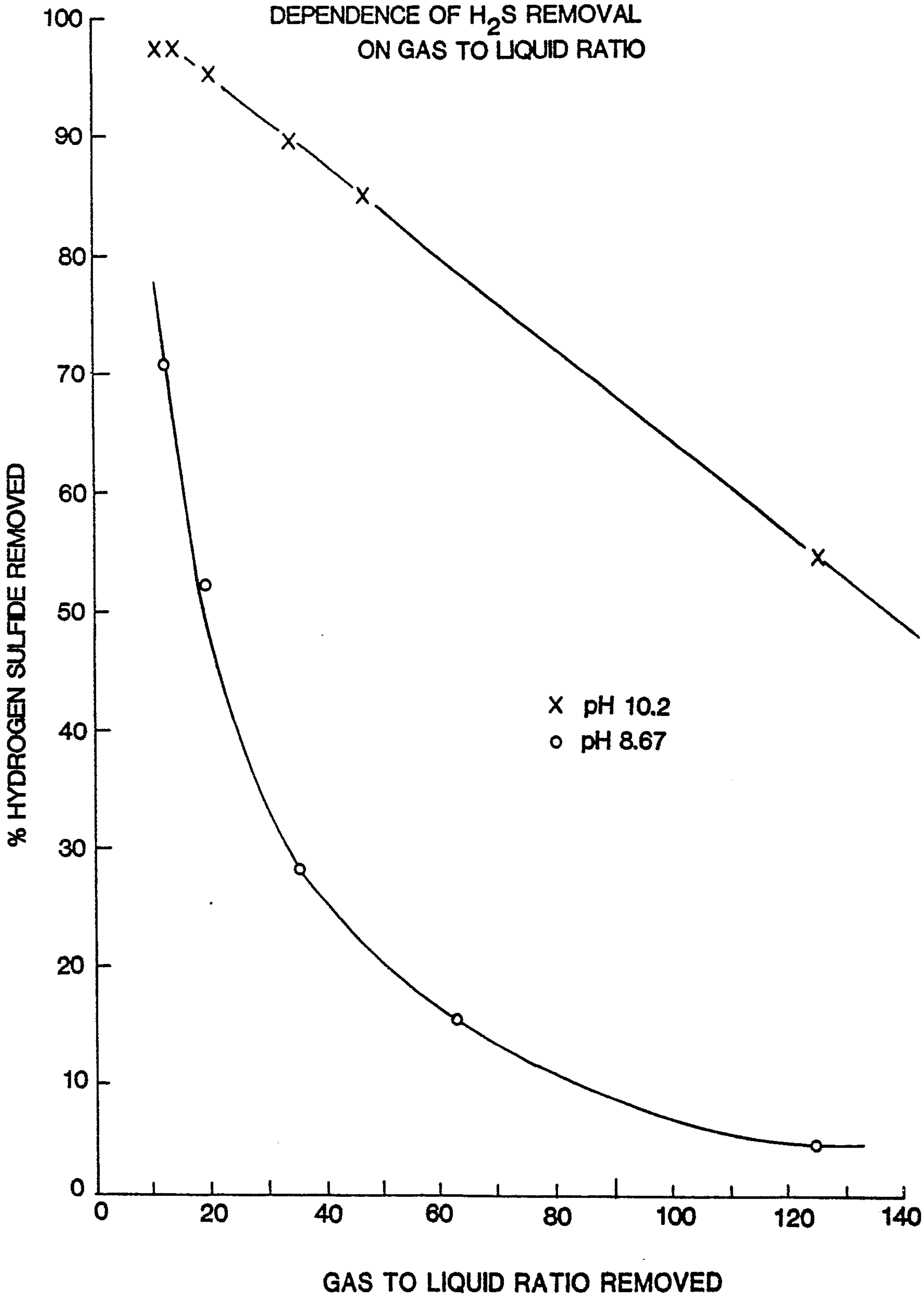
DEPENDENCE OF $H_2S$ REMOVAL
ON GAS TO LIQUID RATIO
% HYDROGEN SULFIDE REMOVED
100
90
80
70
60
50
40
30
20
10
0
0
20
40
60
80
100
120
140
GAS TO LIQUID RATIO REMOVED
X pH 10.2
o pH 8.67

FIG. 8

EFFECT OF $H_2S$ STRIPPED WITH VARYING pH

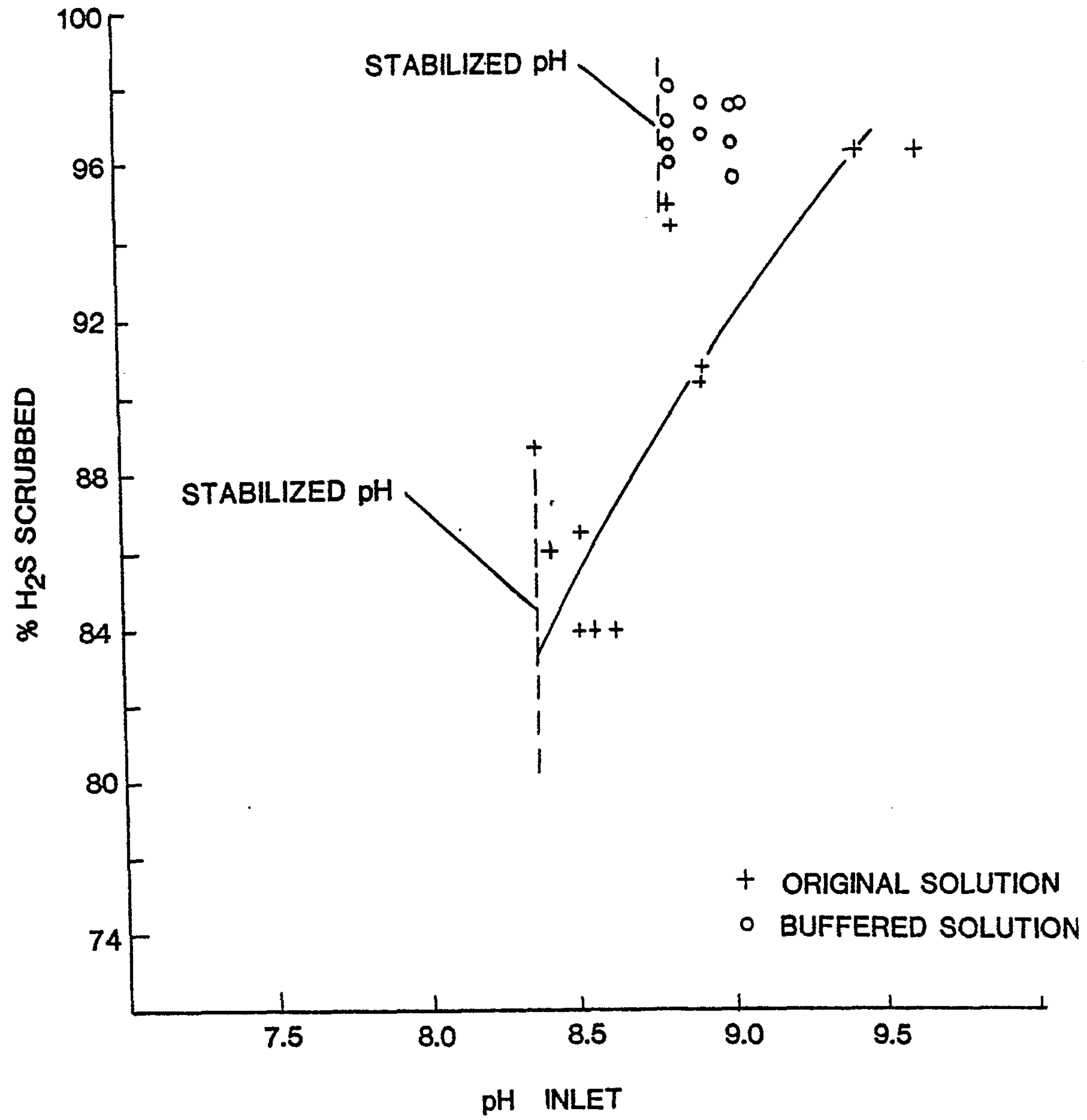


FIG. 9